# EUROPÄISCHE PATENTSCHRIFT

(11) **EP 2 473 406 B1**
(45) Veröffentlichungstag und Bekanntmachung des Hinweises auf die Patenterteilung: **04.11.2015**
(21) Anmeldenummer: 10752331.8
(22) Anmeldetag: 31.08.2010
(51) Int. Cl.: B64D 13/08

(54) **SYSTEM UND VERFAHREN ZUM KÜHLEN MINDESTENS EINER WÄRME ERZEUGENDEN EINRICHTUNG IN EINEM FLUGZEUG**
SYSTEM AND METHOD FOR COOLING AT LEAST ONE HEAT-PRODUCING DEVICE IN AN AIRCRAFT
SYSTÈME ET PROCÉDÉ DE REFROIDISSEMENT D'AU MOINS UN DISPOSITIF PRODUISANT DE LA CHALEUR DANS UN AVION

(30) Priorität: 02.09.2009 DE 102009039814; 02.09.2009 US 239244 P
(43) Veröffentlichungstag der Anmeldung: 11.07.2012
(73) Patentinhaber: Airbus Operations GmbH, 21129 Hamburg (DE)
(72) Erfinder: MÜHLTHALER, Georg, 22609 Hamburg (DE); ERDLE, Anja, 22065 Hamburg (DE); DITTMAR, Jan, 21614 Buxtehude (DE); RÖRING, Sebastian, 20359 Hamburg (DE); TERZI, Cherif, 22159 Hamburg (DE); BLENNER, Jean, F-67000 Strasbourg (FR)
(74) Vertreter: Maiwald Patentanwalts GmbH
(86) Internationale Anmeldenummer: PCT/EP2010/062734
(87) Internationale Veröffentlichungsnummer: WO 2011/026844

(56) Entgegenhaltungen:
- WO-A1-2008/025462
- WO-A1-2009/143963
- DE-A1- 3 824 471
- JP-A- 2001 010 595
- US-A- 4 819 720
- US-A1- 2003 042 361

## Beschreibung

### TECHNISCHES GEBIET

Die Erfindung betrifft ein System zum Kühlen mindestens einer Wärme erzeugenden Einrichtung in einem Flugzeug, ein Verfahren zum Kühlen mindestens einer Wärme erzeugenden Einrichtung, die Verwendung eines Systems zum Kühlen mindestens einer Wärme erzeugenden Einrichtung in einem Flugzeug sowie ein Flugzeug mit mindestens einer Wärme erzeugenden Einrichtung und mindestens einem System zum Kühlen der Wärme erzeugenden Einrichtung.

### HINTERGRUND DER ERFINDUNG

In größeren Flugzeugen moderner Bauart sind verbreitet eine Vielzahl von Geräten integriert, die während des normalen Betriebs des Flugzeug eine beträchtliche Menge Wärme erzeugen, die sicher und zuverlässig aus dem Flugzeug entnommen und beispielsweise an die Umgebung abgegeben werden muss. Beispielsweise weisen moderne Verkehrsflugzeuge eine Vielzahl von unterschiedlichen Recheneinheiten oder sonstigen (Leistungs-)Elektronikeinheiten auf, die allgemein als "Avionik" bezeichnet werden und in einem sog. "Avionik-Compartment" untergebracht sind. Im Stand der Technik werden Avionik-Compartments in Flugzeugen durch unterschiedliche Systeme gekühlt. Es sind Systeme bekannt, bei denen ein Kühlmittel über einen Kühlmittelkreislauf Wärme aus dem Avionik-Compartment aufnimmt und über einen Hautfeldwärmetauscher an die Umgebung wieder abgibt. Problematisch ist hierbei allerdings die Situation bei Bodenaufenthalten an einem heißen Tag, da die Temperaturdifferenz zwischen dem Hautfeldwärmetauscher und der Umgebung zu gering sein könnte, um eine ausreichende Wärmeabfuhr durchführen zu können.

Weiterhin ist bekannt, zumindest während des Flugs durch Einblasen von Luft aus der Flugzeugkabine Komponenten in dem Avionik-Compartment zu kühlen, wobei Luft aus dem sog. "Dreiecksbereich" unterhalb des Kabinenfußbodens und nahe der Rumpfwandung entnommen werden könnte und durch Aufnahme von Wärme der Avionikgeräte das Avionik-Compartment erwärmt wieder verlässt. Hierzu ist allerdings erforderlich, dass das Klimatisierungssystem des Flugzeugs bereits in Betrieb genommen ist und, besonders bei Aufenthalt am Boden an heißen Tagen, die Kabine auf ein vorbestimmtes Temperaturniveau heruntergekühlt wurde. Dementsprechend dürfte es erforderlich sein, bei der Inbetriebnahme eines Flugzeugs an einem heißen Tag zunächst das Klimatisierungssystem in Betrieb zu nehmen, bevor die Avionikgeräte eingeschaltet werden können.

Weiterhin ist bekannt, dass Außenluft benutzt wird, um Wärme aus dem Inneren eines Flugzeugs an seine Umgebung abzugeben. Dazu wird über einen sog. Stauluftkanal am Flugzeug im Fluge vorbeiströmende Luft in das Innere des Flugzeuges gelenkt, über einen thermisch mit dem abzukühlenden Kühlmittel in Verbindung stehenden Wärmetauscher geführt und durch eine Auslassöffnung wieder in die Flugzeugumgebung entlassen. Dabei nimmt die durch den Stauluftkanal strömende Luft abzuführende Wärme auf. Verwendet wird dieses Prinzip z. B. bereits bei Flugzeugklimatisierungssystemen, um heiße komprimierte Luft abzukühlen, die später in die Flugzeugkabine strömen soll. Weiterhin findet dieses Prinzip Verwendung in Kühlsystemen, wie sie beispielsweise in DE 4340317 beschrieben werden. Die durch den Stauluftkanal strömende Luft könnte allerdings den aerodynamischen Widerstand des Flugzeuges während des Flugs spürbar erhöhen. Am Boden kann die Stauluft mit einem Lüfter durch den Stauluftkanal gefördert werden.

WO 2008/025462 A1 offenbart ein Kühlsystem zur Kühlung von Wärmelasten an Bord eines Flugzeugs mit einer Kälteerzeugungseinrichtung und zwei thermisch mit der Kälteerzeugungseinrichtung gekoppelten Kälteträgerfluidkreisläufe, von denen ein erster mit einer ersten Wärmelast verbunden ist und ein zweiter wahlweise angekoppelt werden kann.

DE 38 24 471 A1 zeigt ein Flugzeug mit einer im Inneren des Flugzeugs gebildeten Kühlkammer, die mit einem Zuströmkanal und einem Rückströmkanal verbunden ist, wobei der Zuströmkanal einen Einlass außerhalb der Außenwand aufweist und damit nur mit Hilfe der in großen Flughöhen kalten Außenluft gekühlt wird.

US 4 819 720 zeigt einen Hautwärmetauscher, der durch eine Kombination aus einem Rumpfaußenhautabschnitt und einer beabstandet dazu angeordneten Wandung gebildet wird.

JP 2001-010595 A zeigt einen Hautwärmetauscher für ein Flugzeug, der mit einem Kondensator in Verbindung steht, welcher Wärme aus einem Verdampferkühlkreislauf aufnimmt, der durch die zu kühlenden Elektronikgeräte mit Wärme beaufschlagt wird.

### ZUSAMMENFASSUNG DER ERFINDUNG

Es könnte demnach als eine Aufgabe der Erfindung angesehen werden, ein Kühlsystem zum Kühlen von Wärme erzeugenden Einrichtungen in einem Flugzeug vorzuschlagen, das unabhängig von einer Umgebungstemperatur und unabhängig von einem Klimatisierungssystem eine sichere Kühlung der Wärme erzeugenden Einrichtungen ermöglicht.

Gleichermaßen könnte als Aufgabe der Erfindung angesehen werden, ein derartiges Kühlsystem vorzuschlagen, das eine möglichst geringe Komplexität, einen möglichst geringen Energiebedarf, ein möglichst geringes Gewicht und insbesondere keinen zusätzlichen aerodynamischen Widerstand erzeugt.

Die Aufgabe wird gelöst durch ein System zum Kühlen mindestens einer Wärme erzeugenden Einrichtung in einem Flugzeug, aufweisend mindestens einen Kühlmittelkreislauf, der von einem Kühlmittel durchströmt wird, um Wärme von der Wärme erzeugenden Einrichtung aufzunehmen, wobei der Kühlmittelkreislauf einen stromaufwärts der Wärme erzeugenden Einrichtung befindlichen Vorlauf und einen stromabwärts der Wärme erzeugenden Einrichtung angeordneten Nachlauf aufweist, gemäß Anspruch 1.

Das erfindungsgemäße System zeichnet sich dadurch aus, dass eine thermisch mit dem Nachlauf des Kühlmittelkreislaufs in Verbindung stehende Wärmeabgabevorrichtung zum Abgeben von Wärme aus dem Kühlmittelkreislauf vorgesehen ist, dass eine Temperaturspreizungsvorrichtung die Temperatur des Kühlmittels in dem Vorlauf des Kühlmittelkreislaufs senkt und eine Wärmeabgabetemperatur der Wärmeabgabevorrichtung gegenüber der Temperatur des Kühlmittels im Nachlauf des Kühlmittelkreislaufs erhöht.

Die Art der Wärmeabgabevorrichtung beschränkt die Erfindung nicht. Vielmehr sind zahlreiche Arten von Wärmeabgabevorrichtungen als geeignet zu betrachten, mit deren Hilfe Wärme an eine Umgebung abgegeben werden kann. Naheliegend ist die Verwendung von Wärmeüberträgern, die eine direkte, indirekte (rekuperative) und/oder halbdirekte Wärmeübertragung realisieren.

Das Kühlmittel kann flüssiger oder gasförmiger Natur sein. Jegliche Arten verbreiteter oder spezieller Kühlmittel können eingesetzt werden. Die Erfindung ist nicht auf die Art des Kühlmittels beschränkt.

Durch die Temperaturspreizungsvorrichtung wird demnach das Kühlmittel auf eine geeignete Temperatur heruntergekühlt, so dass eine deutliche und ausreichende Temperaturdifferenz zu entsprechenden Wärmeübertragungsmitteln (Kühlkörper, Wärmetauscher und dergleichen) an den Wärme erzeugenden Einrichtungen hergestellt wird, um effizient Wärme der Wärme erzeugenden Einrichtungen aufzunehmen. Gleichzeitig wird die Wärmeabgabetemperatur einer Wärmeabgabevorrichtung durch die Temperaturspreizungsvorrichtung deutlich gegenüber der Temperatur des Kühlmittels im Nachlauf erhöht, was dazu führt, dass auch bei Bodenaufenthalt des Flugzeugs an heißen Tagen in der Sonne eine ausreichende Temperaturdifferenz zwischen der Wärmeabgabevorrichtung und der Umgebung des Flugzeugs sichergestellt werden kann.

Dies hat den weiteren technischen Effekt, dass es nicht erforderlich ist, ein Klimatisierungssystem des Flugzeugs bereits in Betrieb genommen zu haben, um eine ausreichend kühle Luft zum Kühlen der Wärme erzeugenden Einrichtungen bereitstellen zu können. Vielmehr ist denkbar, die Temperaturspreizungsvorrichtung bereits kurz vor Inbetriebnahme der Wärme erzeugenden Einrichtungen anlaufen zu lassen, so dass relativ zeitnah eine ausreichende Kühlung der Wärme erzeugenden Einrichtungen auch bei extremen Temperaturen innerhalb des Flugzeugs gewährleistet werden kann. Durch die deutliche Temperaturerhöhung gegenüber der Temperatur des Kühlmittels im Nachlauf des Kühlmittelkreislaufs kann eine beliebig geartete Wärmeabgabevorrichtung, beispielsweise ein Wärmetauscher oder dergleichen, auch bei extremen Umgebungstemperaturen die vom Kühlmittel aufgenommene Wärme in die Umgebung abgeben.

Die Erfindung wird nicht auf die Verwendung einer einzigen Bauart einer Temperaturspreizungsvorrichtung beschränkt, vielmehr sind sämtliche Vorrichtungen, Geräte und Systeme verwendbar, die in der Lage sind ein Temperaturniveau zwischen zwei Kühlmittelleitungen zu spreizen. Dementsprechend sind Kompressionskältemaschinen, Absorptionskältemaschinen, Diffusionsabsorptionskältemaschinen, Adsorptionskältemaschinen, auf dem Joule-Thomson-Effekt basierende Kältemaschinen, thermoelektrische Kälteerzeuger (Peltier-Elemente) und dergleichen denkbar. Zusätzlich sind reine Wärmesenken oder Wärmequellen denkbar, um die Temperatur in einer Kühlmittelleitung zu erhöhen bzw. zu senken.

Die Konstruktion des erfindungsgemäßen Systems ist wenig komplex, beinhaltet technisch ausgereifte Komponenten zu niedrigen Kosten und kann ohne aktives Ausblasen von Kühlluft oder dergleichen aus dem Flugzeug nach außen betrieben werden.

Gemäß einer vorteilhaften Weiterbildung des erfindungsgemäßen Systems ist die Wärmeabgabevorrichtung als ein Hautfeldwärmetauscher ausgeführt. Der Hautfeldwärmetauscher kann insbesondere im Fluge einen ausreichenden Wärmetransport an die Umgebung gewährleisten.

Um die Kühlleistung beim am Boden befindlichen Flugzeug zu verbessern, kann sich der Hautfeldwärmetauscher in einen zum Flugzeuginnern gerichteten Luftkanal hinein erstrecken, der mit mindestens einer Fördereinrichtung zum Fördern von Luft aus der Umgebung bzw. Stauluft ausgestattet ist. Die Erstreckung des Hautfeldwärmetauschers in den Luftkanal bedeutet, dass der Hautfeldwärmetauscher nicht nur an der Flugzeugaußenseite Wärme abgeben kann, sondern auch zum Innern des Flugzeugs hin Lamellen, Rippen oder andere luftdurchlässige Gebilde aufweist, die eine Abgabe von Wärme an Umgebungsluft erlauben. Bei stehendem Flugzeug kann eine Luftströmung durch den Luftkanal durch Betreiben der Fördereinrichtung erzwungen werden.

In einer vorteilhaften Weiterbildung des erfindungsgemäßen Systems weist der Luftkanal an zur Umgebung gerichteten Öffnungen Verschlusselemente auf, die bei ausreichender Fluggeschwindigkeit des Flugzeugs zum Eliminieren des zusätzlichen aerodynamischen Widerstands geschlossen werden können. Die Verschlusselemente könnten beispielsweise in Form von Klappen oder rotatorisch zu verschließenden Blenden ausgeführt werden, wobei der Antrieb durch fachübliche elektrische, pneumatische oder hydraulische Aktuatoren zu realisieren ist.

In einer vorteilhaften Weiterbildung des erfindungsgemäßen Systems ist der Kühlmittelkreislauf ein offener Kreislauf. Dies hat den Vorteil, dass als Kühlmittel Luft verwendet werden kann. Da ohnehin aus der Kabine des Flugzeugs ein gewisser Luftvolumenstrom in die Umgebung abgeführt werden muss, kann zumindest ein Teil hiervon als Kühlmittel für das erfindungsgemäße System dienen.

Weiter ist es als günstig anzusehen, dass die Temperaturspreizungsvorrichtung einen ersten Kältemittelkreislauf mit einem Kondensator und einem Verdampfer beinhaltet. Dadurch kann mit ausgereifter Technik zuverlässig, mechanisch einfach und kostengünstig eine ausreichende Temperaturspreizung und dadurch eine besonders effiziente Kühlung durch das erfindungsgemäße System erreicht werden.

Gemäß einer vorteilhaften Weiterbildung des erfindungsgemäßen Systems kann der Kondensator mit Luft aus einer zusätzlichen Luftquelle gekühlt werden, wobei sich die Luftquelle im Innern des Flugzeugs befindet und/oder durch Umgebungsluft und/oder durch Zapfluft realisiert ist. Hierdurch wird eine weiter verbesserte Temperaturspreizung erreicht. Dies bietet sich dann an, wenn als Kühlmittel Luft verwendet wird und insbesondere der Kühlmittelkreislauf offen ist.

Ebenso vorteilhaft ist, wenn der Kondensator im Nachlauf des Kühlmittelkreislaufs angeordnet ist. Dadurch wird gleichzeitig die durch den Verdampfer erreichbare Temperaturabsenkung verstärkt, wodurch insgesamt die Effizienz des erfindungsgemäßen Systems steigt.

Gleichzeitig kann auch der Verdampfer im Nachlauf des Kühlmittelkreislaufs angeordnet sein, wobei dann jedoch der Kondensator nicht im Vorlauf des Kühlmittelkreislaufs anzuordnen ist, sondern etwa mit der Wärmeabgabevorrichtung oder einem anderen Wärme abführenden Element direkt verbunden sein könnte.

Der Kondensator kann gemäß seiner vorteilhaften Weiterbildung des erfindungsgemäßen Systems mit einem Wärmetauscher verbunden sein, der mit Luft aus einer Luftquelle beaufschlagt ist, wobei sich die Luftquelle im Innern des Flugzeugs befindet und/oder durch Umgebungsluft realisiert ist. Dadurch kann auch hier die Wärme des Kondensators über den Wärmetauscher an die durchströmende Luft aus der Luftquelle abgegeben werden.

Weiter könnte in einer vorteilhaften Weiterbildung des erfindungsgemäßen Systems die Temperaturspreizungsvorrichtung einen ersten Wärmetauscher zum Kühlen von Kühlmittel aus dem Nachlauf des Kühlmittelkreislaufs mit Luft aus einer Luftquelle aufweisen, wobei sich die Luftquelle im Innern des Flugzeugs befindet und/oder durch Umgebungsluft realisiert ist. Dadurch kann zumindest bei bereits in Betrieb genommener Klimatisierung des Flugzeugs oder bei ausreichend geringen Umgebungstemperaturen ein sicherer Betrieb des erfindungsgemäßen Systems erreicht werden, wobei die Temperaturspreizungsvorrichtung dann zusätzlich weitere Maßnahmen zumindest zur Kühlung des Kühlmittels im Vorlauf aufweisen sollte. Die Aufgabe wird ferner gelöst durch ein Verfahren zum Kühlen mindestens einer Wärme erzeugenden Einrichtung gemäß Anspruch 14 sowie durch ein Flugzeug mit mindestens einer Wärme erzeugenden Einrichtung und mindestens einem System zum Kühlen von einer Wärme erzeugenden Einrichtung gemäß Anspruch 15.

### KURZE BESCHREIBUNG DER ZEICHNUNGEN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbeziehungen. In den Figuren stehen weiterhin gleiche Bezugszeichen für gleiche oder ähnliche Objekte.
Fig. 1 zeigt ein erstes Ausführungsbeispiel des erfindungsgemäßen Systems in einer schematischen Darstellung.
Fig. 2 zeigt ein zweites Ausführungsbeispiel des erfindungsgemäßen Systems in einer schematischen Darstellung.
Fig. 3 zeigt ein drittes Ausführungsbeispiel des erfindungsgemäßen Systems in einer schematischen Darstellung.
Fig. 4 zeigt ein viertes Ausführungsbeispiel eines solchen Systems in einer schematischen Darstellung.
Fig. 5 zeigt ein fünftes Ausführungsbeispiel eines solchen Systems in einer schematischen Darstellung.
Fig. 6 zeigt ein sechstes Ausführungsbeispiel des erfindungsgemäßen Systems in einer schematischen Darstellung.
Fig.7 zeigt eine schematische Darstellung eines erfindungsgemäßen Hautfeldwärmetauschers.
Fig. 8 zeigt eine schematische Darstellung eines erfindungsgemäßen Verfahrens.
Fig. 9 zeigt ein Flugzeug mit mindestens einem erfindungsgemäßen System.

### DETAILLIERTE DARSTELLUNG EXEMPLARISCHER AUSFÜHRUNGSFORMEN

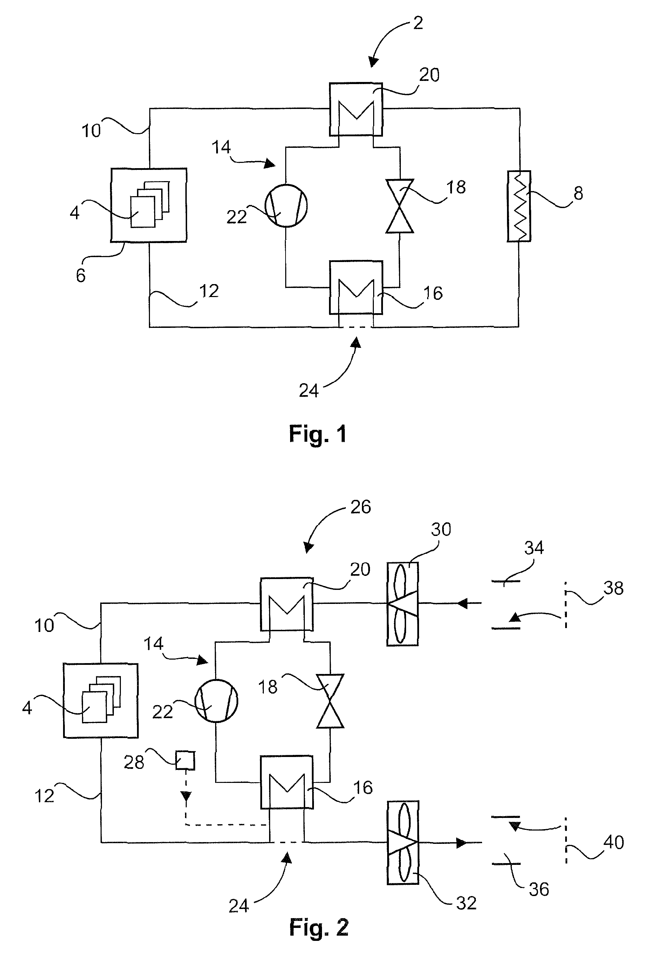

In Fig. 1 wird ein erstes Ausführungsbeispiel eines erfindungsgemäßen Systems 2 zum Kühlen mindestens einer Wärme erzeugenden Einrichtung 4 in einem Flugzeug präsentiert. Exemplarisch wird ein Raum 6 dargestellt, in dem die Wärme erzeugenden Einrichtungen 4 untergebracht sind. Die Ausgestaltung dieses Raums 6, der etwa ein Avionik-Compartment sein kann, ist nicht Gegenstand der Erfindung und wird dementsprechend auch nicht detailliert beschrieben. Es sei allerdings darauf hingewiesen, dass die Wärme erzeugenden Einrichtungen 4 geeignete Mittel aufweisen, mit deren Hilfe Wärme an ein Kühlmittel abgegeben werden kann. Diese Mittel können vielfältiger Natur sein, beispielsweise Wärmetauscher, Kühlkörper oder Kühlrippen zum Umströmen mit Luft und dergleichen.

Das erfindungsgemäße System 2 weist weiterhin eine Wärmeabgabevorrichtung 8 auf, die mit einem Vorlauf 10 und einem Nachlauf 12 des Raums 6 bzw. der Wärme erzeugenden Einrichtung 4 einen geschlossenen Kreislauf bildet. In diesem Kreislauf zirkuliert ein Kühlmittel, das von dem Vorlauf 10 zu den Wärme erzeugenden Einrichtungen 4 strömt, dort Wärme aufnimmt, anschließend in den Nachlauf 12 zur Wärmeabgabevorrichtung 8 strömt, dort Wärme an die Umgebung des Flugzeugs abgibt und anschließend wieder zum Vorlauf 10 strömt und dort erneut zum Aufnehmen von Wärme zur Verfügung steht.

Eine effiziente Wärmeabgabe durch die Wärmeabgabevorrichtung 8 an die Umgebung und eine besonders effiziente Wärmeaufnahme von einer Wärme erzeugenden Einrichtung 4 durch das Kühlmittel aus dem Vorlauf 10 kann nur dann realisiert werden, wenn ein entsprechendes Temperaturgefälle zur Umgebung bzw. zum Kühlmittel vorliegt. Gerade bei hohen Temperaturen kann es schwierig oder gänzlich unmöglich sein, eine entsprechend hohe Wärmeabgabetemperatur in der Wärmeabgabevorrichtung 8 zu erreichen, die überhaupt einen Wärmefluss in die Umgebung ermöglicht. Gleichermaßen wäre ohne weitere Einrichtungen die Temperatur des Kühlmittels in dem Vorlauf 10 so hoch, dass keine ausreichend hohe Temperaturdifferenz zum Kühlen der Wärme erzeugenden Einrichtungen 4 vorliegt und im Gegenzug dadurch ein sehr hoher Volumenstrom des Kühlmittels notwendig wird. Wenn die Temperatur der Umgebung zu hoch ist, kann unter Umständen auch ein noch so hoher Kühlmittelstrom nicht ausreichen um die Wärme abzuführen.

Das erfindungsgemäße System 2 weist aus diesem Grund eine Temperaturspreizungsvorrichtung 14 auf, die exemplarisch als ein Kältemittelkreislauf mit einem Kondensator 16, einem Drosselventil 18, einem Verdampfer 20 und einem Verdichter 22 ausgeführt ist. Dieser auch Kaltdampf-Kältemaschine genannte Kältemittelkreislauf ist in der Lage, die Temperatur des Kühlmittels aus dem Nachlauf 12 durch den Kondensator 16 zu erhöhen und durch den Verdampfer 20 abzusenken. Dies bedeutet, dass das Kühlmittel aus dem Nachlauf 12, welches bereits Wärme aufgenommen hat, noch weiter erwärmt wird, so dass die Wärmeabgabetemperatur in der Wärmeabgabevorrichtung 8 deutlich gesteigert wird. Dies hat den Effekt, dass das Temperaturgefälle zu der Umgebung auch an heißen Tagen ausreichend hoch ist und eine effiziente Abgabe von Wärme erlaubt. Gleichermaßen wird das zum Vorlauf 10 strömende Kühlmittel durch den Verdampfer 20 auf eine deutlich niedrigere Temperatur heruntergekühlt, so dass dadurch eine effiziente Aufnahme von Wärme der Wärme erzeugenden Einrichtung 4 geschehen kann.

Sollte es erforderlich sein, die Temperatur des in den Nachlauf 12 strömenden Kühlmittels, beispielsweise aufgrund einer niedrigen Umgebungstemperatur, nicht ganz so stark zu erhöhen, kann zum Reduzieren der Erwärmung des Kühlmittels an den Kondensator 16 ein Bypass 24 angeordnet werden, so dass zumindest ein Teil des in den Nachlauf 12 strömenden Kühlmittels direkt zur Wärmeabgabevorrichtung 8 strömen kann.

In Fig. 2 wird eine Abwandlung in Form eines erfindungsgemäßen Systems 26 gezeigt, wobei auch hier die Temperaturspreizungsvorrichtung 14 als Kältemittelkreislauf ausgeführt ist, hier allerdings der übergeordnete Kühlmittelkreislauf nicht geschlossen ist. Dies bedeutet implizit, dass Luft besonders als Kühlmittel geeignet ist, die einer Luftquelle entnommen und wieder in die Umgebung des Flugzeugs abgeführt wird.

Zusätzlich weist das erfindungsgemäße System 26 eine optionale weitere Luftquelle 28 auf, die Luft in den Nachlauf 12 des Kühlmittelkreislaufs einbringt. Dadurch wird die Temperatur des Kühlmittels aus dem Nachlauf 12 vor Erreichen des Kondensators 16 gesenkt. Ein optionaler Bypass 24, der hier gestrichelt dargestellt ist, dient zum Aufrechterhalten der Volumenstrombilanz und unter Umständen zur ausschließlichen Verwendung von Luft aus der Luftquelle 28 zum Kühlen des Kondensators 16, falls diese Luft kühler als die Temperatur im Nachlauf 12 des Kühlmittelkreislaufs sein sollte.

Sollte das Flugzeug an einem heißen Tag am Boden stehen, so ist nicht zu erwarten, dass selbsttätig Umgebungsluft in das Flugzeug eintritt, um in dem erfindungsgemäßen System 26 verwertet zu werden. Das erfindungsgemäße System 26 weist demnach beispielhaft zwei Fördereinrichtungen 30 und 32 auf, mit denen Frischluft aus der Umgebung des Flugzeugs zu dem Verdampfer 20 in Richtung des Vorlaufs 10 eingeleitet wird und wieder aus dem Flugzeug hinaus befördert wird. Die Fördereinrichtungen 30 und 32 befinden sich dabei an geeigneten Luftöffnungen 34 und 36, die beispielsweise während des Flugs durch Verschlusselemente 38 und 40 verschlossen und am Boden wieder geöffnet werden könnten.

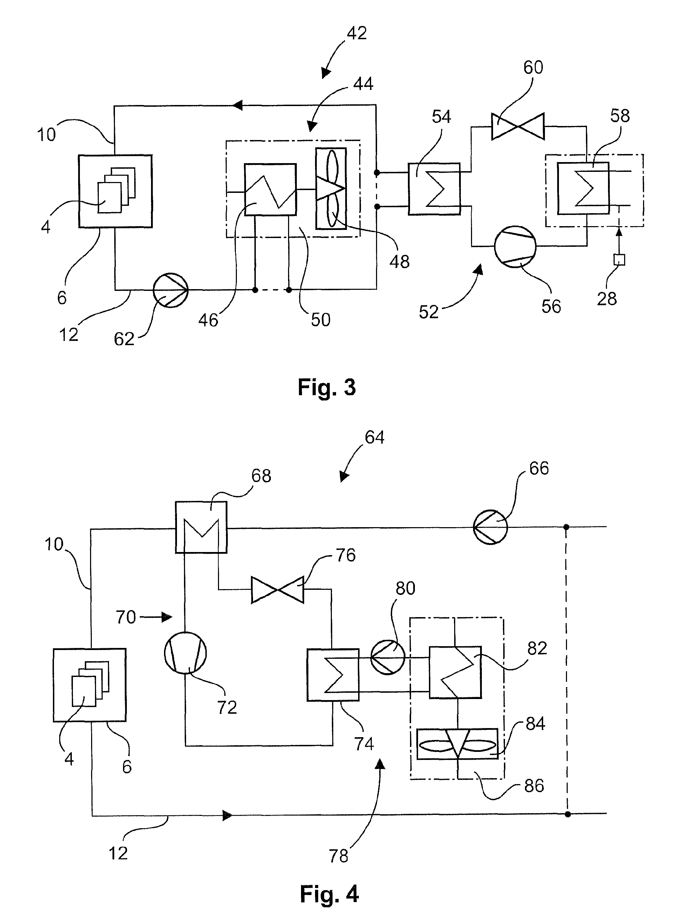

In Fig. 3 wird eine weitere Ausführungsform des erfindungsgemäßen Systems 42 gezeigt, bei dem ein durch eine Fördereinrichtung 62 gefördertes flüssiges Kühlmittel in einem geschlossenen Kreislauf eingesetzt werden könnte, wobei der geschlossene Kreislauf eine Wärmeabgabevorrichtung 44 umfasst, die beispielsweise aus der Kombination eines Wärmetauschers 46 und eines Gebläses 48 in einem Stauluftkanal 50 realisiert ist.

Zum Erreichen einer effizienten Spreizung des Temperaturniveaus zwischen der Wärmeabgabevorrichtung 44 und dem Vorlauf 10 wird eine Temperaturspreizungsvorrichtung 52 in Form eines Kältemittelkreislaufs eingesetzt, der einen Verdampfer 54, einen Verdichter 56, einen Kondensator 58 und ein Drosselventil 60 aufweist. Hier ist allerdings exemplarisch der Verdampfer 54 zwischen dem Vorlauf 10 und dem Nachlauf 12 angeordnet, so dass das vom Nachlauf 12 zum Vorlauf 10 strömende Kühlmittel dadurch in seiner Temperatur reduziert wird. Da bereits vor dem Verdampfer 54 eine Wärmeabgabevorrichtung 44 Wärme aus dem Nachlauf 12 abgegeben hat, kann durch die Verwendung des Kältemittelkreislaufs 52 die Temperatur im Vorlauf 10 deutlich weiter gesenkt werden.

Der Kondensator 58 wird ferner in einem Stauluftkanal oder aus einer zusätzlichen Luftquelle 28 etwa über Extraktionsluft, die ebenfalls exemplarisch aus dem Avionik-Compartment, oder aber aus dem Cockpit oder der Kabine stammt, gekühlt. Alternativ kann die alternative Luftquelle 28 mittels eines Einlassventils für Umgebungsluft am Flugzeugrumpf oder durch Zapfluft aus einem oder mehreren Triebwerken 130 realisiert werden.

In Fig. 4 wird eine weitere Ausführungsform eines solchen Systems 64 gezeigt, bei dem der Kühlmittelkreislauf entweder geschlossen oder offen ausgeführt sein kann. Eine Fördereinrichtung 66 fördert das Kühlmittel vom Nachlauf 12 zum Vorlauf 10, wo das Kühlmittel einen Verdampfer 68 einer als Kältemittelkreislauf realisierten Temperaturspreizungsvorrichtung 70 durchströmt, der ebenso einen Verdichter 72, einen Kondensator 74 und ein Drosselventil 76 aufweist. Hierdurch wird die Temperatur des Kühlmittels im Vorlauf 10 deutlich gesenkt, was zu einer besseren Wärmeaufnahme der Wärme erzeugenden Einrichtungen 4 führt.

Der Kondensator 74 des Kältemittelkreislaufs 70 wird durch eine sekundäre Kühleinrichtung 78 gekühlt, wobei diese etwa eine Fördereinrichtung 80, einen Wärmetauscher 82 und ein Gebläse 84 in einem Stauluftkanal 86 aufweisen könnte.

Ein besonderer Vorteil einer derartigen Anordnung liegt darin, dass die Temperaturspreizungsvorrichtung 70 in einem druckbeaufschlagten Bereich des Flugzeugrumpfs untergebracht und betrieben werden kann. Theoretisch könnte eine Temperaturspreizungsvorrichtung, wie etwa Temperaturspreizungsvorrichtung 52 aus Fig. 3 teilweise oder vollständig in einem nicht druckbeaufschlagten Bereich des Flugzeugs untergebracht werden, was die Installation im Vergleich zu einer Integration der Temperaturspreizungsvorrichtung 52 in dem nicht druckbeaufschlagten Bereich vereinfachen könnte. Dies könnte für Wartungszwecke allerdings ungünstig sein, da der Kältemittelkreislauf für Wartungszwecke unterbrochen werden müsste.

Wird das System 64 als offener Kreislauf betrieben, so könnten die in Fig. 2 dargestellten zwei Fördereinrichtungen 30 und 32 vor dem Vorlauf 10 und nach dem Nachlauf 12 angeordnet werden. In diesem Fall wäre als Kühlmittel auch Luft aus der Umgebung oder aus dem Innern des Flugzeugs verwendbar. Wird der Kühlmittelkreislauf geschlossen ausgeführt, kann jegliches geeignete Kühlmittel verwendet werden.

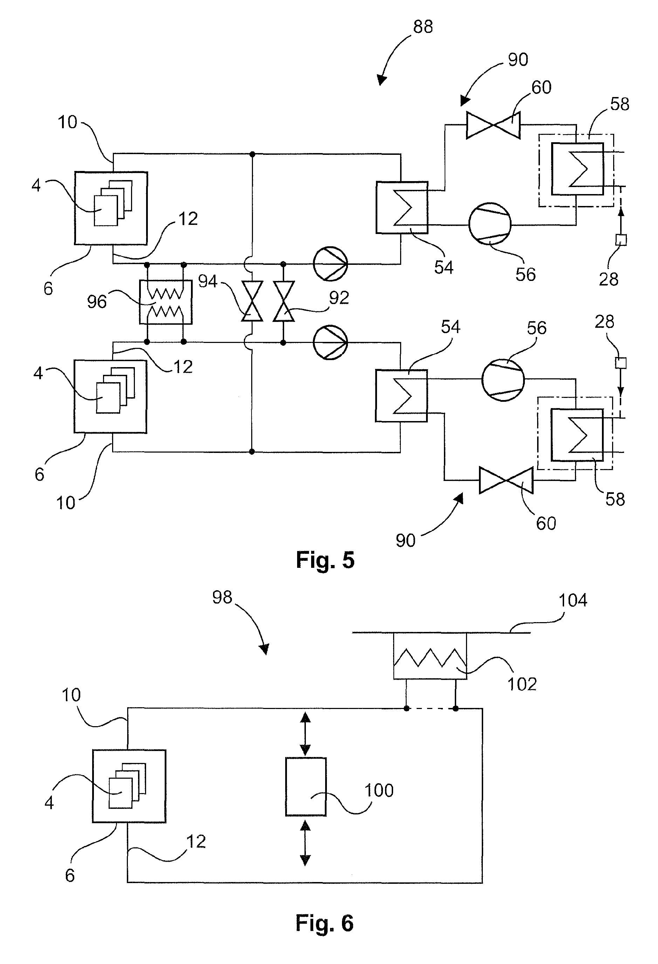

Es ist selbstverständlich möglich, nicht nur ein einzelnes erfindungsgemäßes System 2, 26, 42 oder 64 in einem Flugzeug zu verwenden, es wäre auch aus Redundanzgründen eine Vervielfältigung denkbar. Aus diesem Grunde wird in Fig. 5 exemplarisch eine Kombination zweier erfindungsgemäßer Systeme 42 gemäß Fig. 3 dargestellt, allerdings ohne den Stauluftkanal 50, den darin angeordneten Wärmetauscher 46 und das Gebläse 48. Diese Ausführungsform eines derart ausgestalteten Systems 88 enthält demnach zwei Kühlmittelkreisläufe, die jeweils von einer als Kältemittelkreislauf realisierten Temperaturspreizungsvorrichtung 90 gekühlt werden. Die beiden Kühlmittelkreisläuft sind durch Ventile 92 und 94 sowie / bzw. einen Wärmetauscher 96 thermisch miteinander verbunden.

Es ist darauf hinzuweisen, dass die Darstellung symmetrisch ist, d. h. der in der Zeichnungsebene obere Kühlmittelkreislauf ist spiegelverkehrt zu dem unteren Kühlmittelkreislauf gezeigt.

Fällt etwa eine der beiden Temperaturspreizungsvorrichtungen 90 aus, können die Nachläufe 12 der beiden Kühlmittelkreisläufe durch das Ventil 92 pneumatisch miteinander verbunden werden und die Vorläufe 10 der beiden Kühlmittelkreisläufe durch ein Ventil 94. Alternativ oder zusätzlich dazu kann auch Wärme über den Wärmetauscher 96 von einem Kühlmittelkreislauf in den anderen Kühlmittelkreislauf übertragen werden. Somit wird sichergestellt, dass beispielsweise zwei an voneinander beabstandeten Orten positionierte Räume 6 mit mehreren Wärme erzeugenden Einrichtungen 4 in einem Flugzeug auch bei Ausfall einer der Temperaturspreizungsvorrichtungen 90 ausreichend, auch am Boden, gekühlt werden können.

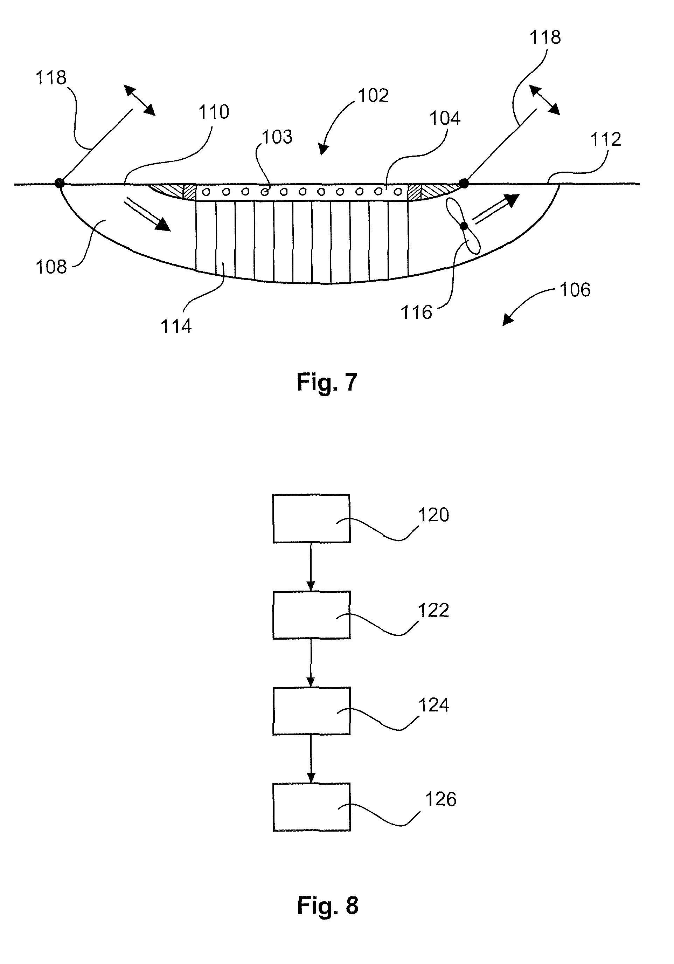

In der Fig. 6 wird eine verallgemeinerte vorteilhafte Ausführungsform des erfindungsgemäßen Systems 98 schematisch dargestellt, die sich auf sämtliche vorweg beschriebenen Ausführungsformen beziehen kann. Eine Temperaturspreizungsvorrichtung 100, die auf beliebige Art und Weise realisiert werden kann, ist in einen Kühlmittelkreislauf integriert, der an eine Sonderform einer Wärmeabgabevorrichtung 8 in Form eines Hautfeldwärmetauscher 102 angeschlossen ist. Der Hautfeldwärmetauschers 102 weist neben thermisch zur konvektiven Wärmeabgabe an die Umgebung mit einer Außenhautfläche 104 verbundene und von Kühl- oder Kältemittel durchströmte Strömungskanäle 103 auf, sondern auch einen Stauluftkanal 108, wie er in Fig. 7 deutlich wird. Zwischen der Außenhaut 104 des Hautfeldwärmetauschers 102 und dem Flugzeuginnern, hier durch das Bezugszeichen 106 angedeutet, befindet sich der Stauluftkanal 108, der eine erste Öffnung 110 und eine zweite Öffnung 112 aufweist. Durch die erste Öffnung 110 kann Luft in den Stauluftkanal 108 einströmen und durch die Öffnung 112 diesen wieder verlassen. Vom Hautfeldwärmetauscher 102 erstrecken sich exemplarisch als Kühlrippen ausgeführte Wärmeabgabeelemente 114 in den Stauluftkanal 108, die von der durch den Strömungskanal 108 strömenden Luft umspült werden. Die Effizienz der Wärmeübertragung an die Umgebung kann dadurch gesteigert werden.

Zum Erreichen eines ausreichenden Luftstroms zum Aufnehmen der Wärme des Hautfeldwärmetauschers 102 bei am Boden befindlichem Flugzeug ist zusätzlich ein Gebläse 116 in dem Stauluftkanal 108 angeordnet. Der Hautfeldwärmetauscher 102 ist demnach nicht auf Wärmeübertragung durch Konvektion an der Außenhaut 104 beschränkt.

Zum Verringern des Luftwiderstands in Flugphasen mit ausreichend hoher Fluggeschwindigkeit und ausreichend guter Wärmeübertragung durch die Außenhaut 104 können die Öffnungen 110 und 112 durch mechanisch angetriebene Verschlusselemente 118 geschlossen werden.

In einem erfindungsgemäßen Verfahren nach Fig. 8 wird zunächst Wärme von Wärme erzeugenden Einrichtungen mittels eines in einen Nachlauf eines Kühlmittelkreislaufs strömenden Kühlmittels aufgenommen 120 und anschließend die Temperatur des Kühlmittels im Nachlauf erhöht 122. Mittels einer Wärmeabgabevorrichtung wird Wärme des Temperatur erhöhten Kühlmittels abgegeben 124, wonach anschließend die Temperatur des in einen Vorlauf des Kühlmittelkreislaufs strömenden Kühlmittels gesenkt wird 126.

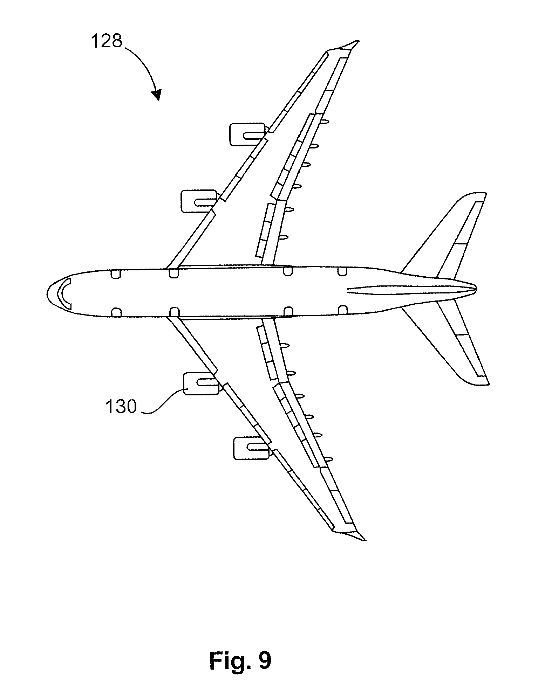

Schließlich zeigt Fig. 9 ein Flugzeug 128, das mit mindestens einem erfindungsgemäßen System zum Kühlen mindestens einer Wärme erzeugenden Einrichtung ausgerüstet ist.

Ergänzend ist darauf hinzuweisen, dass "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

### BEZUGSZEICHEN

- 2: erfindungsgemäßes System
- 4: Wärme erzeugende Einrichtung
- 6: Raum
- 8: Wärmeabgabevorrichtung
- 10: Vorlauf
- 12: Nachlauf
- 14: Temperaturspreizungsvorrichtung
- 16: Kondensator
- 18: Drosselventil
- 20: Verdampfer
- 22: Verdichter
- 24: Bypass
- 26: erfindungsgemäßes System
- 28: zusätzliche Luftquelle
- 30: Fördereinrichtung
- 32: Fördereinrichtung
- 34: Öffnung
- 36: Öffnung
- 38: Verschlusselement
- 40: Verschlusselement
- 42: erfindungsgemäßes System
- 44: Wärmeabgabevorrichtung
- 46: Wärmetauscher
- 48: Gebläse
- 50: Stauluftkanal
- 52: Temperaturspreizungsvorrichtung
- 54: Verdampfer
- 56: Verdichter
- 58: Kondensator
- 60: Drosselventil
- 62: Fördereinrichtung
- 64: erfindungsgemäßes System
- 66: Fördereinrichtung
- 68: Verdampfer
- 70: Temperaturspreizungsvorrichtung
- 72: Verdichter
- 74: Kondensator
- 76: Drosselventil
- 78: sekundäre Kühleinrichtung
- 80: Fördereinrichtung
- 82: Wärmetauscher
- 84: Gebläse
- 86: Stauluftkanal
- 88: erfindungsgemäßes System
- 90: Temperaturspreizungsvorrichtung
- 92: Ventil
- 94: Ventil
- 96: Wärmetauscher
- 98: erfindungsgemäßes System
- 100: Temperaturspreizungsvorrichtung
- 102: Hautfeldwärmetauscher
- 103: Strömungskanäle
- 104: Außenhaut
- 106: Flugzeuginneres
- 108: Stauluftkanal
- 110: Öffnung
- 112: Öffnung
- 114: Kühlrippen
- 116: Gebläse
- 118: Verschlusselement
- 120: Aufnehmen von Wärme
- 122: Erhöhen der Temperatur des Kühlmittels
- 124: Abgeben von Wärme
- 126: Senken der Temperatur des Kühlmittels
- 128: Flugzeug
- 130: Triebwerk

## Patentansprüche

1. System (2, 26, 42, 64, 88, 98) zum Kühlen mindestens einer Wärme erzeugenden Einrichtung (4) in einem Flugzeug, aufweisend
mindestens einen Kühlmittelkreislauf, der von einem Kühlmittel durchströmt wird, um Wärme von der Wärme erzeugenden Einrichtung (4) aufzunehmen,
wobei der Kühlmittelkreislauf einen stromaufwärts der Wärme erzeugenden Einrichtung (4) befindlichen Vorlauf (10) und einen stromabwärts der Wärme erzeugenden Einrichtung angeordneten Nachlauf (12) aufweist und
eine mit dem Nachlauf (12) des Kühlmittelkreislaufs in Fluidverbindung stehende Wärmeabgabevorrichtung (8) zum Abgeben von Wärme aus dem Kühlmittelkreislauf,
**gekennzeichnet durch** eine Temperaturspreizungsvorrichtung (14, 52, 70, 90, 100) zum Senken der Temperatur des Kühlmittels in dem Vorlauf (10) des Kühlmittelkreislaufs und gleichzeitig zum Erhöhen einer Wärmeabgabetemperatur der Wärmeabgabevorrichtung (8) gegenüber der Temperatur des Kühlmittels im Nachlauf (12) des Kühlmittelkreislaufs.

2. System (2, 26, 42, 64, 88, 98) nach Anspruch 1, ferner aufweisend einen an einer Außenhaut (104) des Flugzeugs angeordneten Hautfeldwärmetauscher (102) mit thermisch mit der Außenhaut (104) verbundenen Strömungskanälen (103) als Wärmeabgabevorrichtung (8).

3. System (2, 26, 42, 64, 88, 98) nach Anspruch 2, ferner aufweisend einen durch den Hautfeldwärmetauscher (102) zur Außenseite des Flugzeugs hin begrenzten Luftkanal (108) mit sich in den Luftkanal (108) erstreckenden und von Luft umspülbaren Wärmeabgabeelementen (114).

4. System (2, 26, 42, 64, 88, 98) nach Anspruch 3, ferner aufweisend mindestens ein Verschlusselement (118) zum Öffnen oder Schließen mindestens einer Öffnung (110, 112) des Luftkanals (108).

5. System (2, 26, 42, 64, 88, 98) nach einem der vorhergehenden Ansprüche, wobei der Kühlmittelkreislauf ein offener Kreislauf ist.

6. System (2, 26, 42, 64, 88, 98) nach einem der vorhergehenden Ansprüche, ferner aufweisend mindestens eine Fördereinrichtung (30, 32, 62, 66, 80) zum Fördern des Kühlmittels in dem Kühlmittelkreislauf.

7. System (2, 26, 42, 64, 88, 98) nach einem der vorhergehenden Ansprüche, wobei die Temperaturspreizungsvorrichtung (14, 52, 70, 90, 100) einen Kältemittelkreislauf mit einem Kondensator (16, 58, 74) und einem Verdampfer (20, 54, 68) beinhaltet.

8. System (2, 26, 42, 64, 88, 98) nach Anspruch 7, wobei der Kondensator (16, 58, 74) im Nachlauf (12) des Kühlmittelkreislaufs angeordnet ist.

9. System (2, 26, 42, 64, 88, 98) nach Anspruch 7, wobei der Verdampfer (20, 54, 68) im Vorlauf und/oder im Nachlauf (12) des Kühlmittelkreislaufs angeordnet ist.

10. System (2, 26, 42, 64, 88, 98) nach Anspruch 9, wobei die Wärmeabgabevorrichtung (8) durch den Kondensator (16, 58, 74) realisiert ist, der dazu eingerichtet ist, mittels Luft aus einer zusätzlichen Luftquelle (28) gekühlt zu werden, wobei die zusätzliche Luftquelle (28) Luft aus dem Innern des Flugzeugs und/oder der Umgebung und/oder mittels Zapfluft bereitstellt.

11. System (2, 26, 42, 64, 88, 98) nach Anspruch 10, wobei der Kondensator (16, 58, 74) mit einem Wärmetauscher (46, 58, 82) verbunden ist, der dazu eingerichtet ist, mit Luft aus dem Innern des Flugzeugs und/oder durch Umgebungsluft und/oder durch Zapfluft gekühlt zu werden.

12. System (2, 26, 42, 64, 88, 98) nach einem der vorhergehenden Ansprüche, aufweisend zwei Kühlmittelkreisläufe, deren Vorläufe (10) thermisch über einen Wärmetauscher (96) miteinander verbunden sind.

13. System (2, 26, 42, 64, 88, 98) nach Anspruch 12, wobei Vorläufe (10) und die Nachläufe (12) der beiden Kühlmittelkreisläufe über Ventile (92, 94) schaltbar miteinander in Verbindung stehen.

14. Verfahren zum Kühlen mindestens einer Wärme erzeugenden Einrichtung in einem Flugzeug, aufweisend die Schritte:
- Aufnehmen (120) von Wärme der Wärme erzeugenden Einrichtung mittels eines in einen Nachlauf eines Kühlmittelkreislaufs strömenden Kühlmittels;
- Erhöhen (122) der Temperatur des Kühlmittels im Nachlauf;
- Abgeben (124) von Wärme des Temperatur erhöhten Kühlmittels mit einer mit dem Nachlauf (12) in Fluidverbindung stehenden Wärmeabgabevorrichtung;
- Mit dem Erhöhen (122) der Temperatur des Kühlmittels im Nachlauf gleichzeitiges Senken (126) der Temperatur des in einen Vorlauf des Kühlmittelkreislaufs strömenden Kühlmittels.

15. Flugzeug (128), aufweisend mindestens einen Raum (6) mit mindestens einer Wärme abgebenden Einrichtung (4) und mindestens ein System (2, 26, 42, 64, 88, 98) zum Kühlen der Wärme erzeugenden Einrichtung (4) nach Anspruch 1.

## Claims

1. A system (2, 26, 42, 64, 88, 98) for cooling at least one heat producing device (4) in an aircraft, comprising
at least one coolant circuit through which a coolant flows in order to absorb heat from the heat producing device (4),
wherein the coolant circuit comprises a feed line (10) arranged upstream of the heat producing device (4), and a return line (12) arranged downstream of the heat producing device, and
a heat dissipation device (8), which thermally communicates with the return line (12) of the coolant circuit, for dissipating heat from the coolant circuit, and
**characterised by** a temperature spreading device (14, 52, 70, 90, 100) for reducing the temperature of the coolant in the feed line (10) of the coolant circuit and for simultaneously increasing a heat dissipation temperature of the heat dissipation device (8) relative to the temperature of the coolant in the return line (12) of the coolant circuit.

2. The system (2, 26, 42, 64, 88, 98) of claim 1, further comprising a skin-section heat exchanger (102), arranged on an outer skin (104) of the aircraft, with flow ducts (103) as a heat dissipation device (8), which flow ducts (103) are thermally connected to the outer skin (104).

3. The system (2, 26, 42, 64, 88, 98) of claim 2, further comprising an air duct (108) which is delimited by the skin-section heat exchanger (102) towards the outside of the aircraft, with heat dissipation elements (114) that extend into the air duct (108), and around which heat dissipation elements (114) air can flow.

4. The system (2, 26, 42, 64, 88, 98) of claim 3, further comprising at least one closing element (118) for opening or closing at least one opening (110, 112) of the air duct (108).

5. The system (2, 26, 42, 64, 88, 98) of any one of the preceding claims, wherein the coolant circuit is an open circulation system.

6. The system (2, 26, 42, 64, 88, 98) of any one of the preceding claims, further comprising at least one conveying device (30, 32, 62, 66, 80) for conveying the coolant in the coolant circuit.

7. The system (2, 26, 42, 64, 88, 98) of any one of the preceding claims, wherein the temperature spreading device (14, 52, 70, 90, 100) comprises a cooling medium circuit with a condenser (16, 58, 74) and an evaporator (20, 54, 68).

8. The system (2, 26, 42, 64, 88, 98) of claim 7, wherein the condenser (16, 58, 74) is arranged at the return line (12) of the coolant circuit.

9. The system (2, 26, 42, 64, 88, 98) of claim 7, wherein the evaporator (20, 54, 68) is arranged at the feed line and/or at the return line (12) of the coolant circuit.

10. The system (2, 26, 42, 64, 88, 98) of claim 9, wherein the heat dissipation device (8) has been implemented by the condenser (16, 58, 74) that is designed to be cooled by means of air from an additional air source (28), wherein the additional air source (28) provides air from the interior of the aircraft and/or from the surroundings and/or by means of bleed air.

11. The system (2, 26, 42, 64, 88, 98) of claim 10, wherein the condenser (16, 58, 74) is connected to a heat exchanger (46, 58, 82) that is designed to be cooled by air from the interior of the aircraft and/or by ambient air and/or by bleed air.

12. The system (2, 26, 42, 64, 88, 98) of any one of the preceding claims, comprising two coolant circuits whose feed lines (10) are thermally interconnected by way of a heat exchanger (96).

13. The system (2, 26, 42, 64, 88, 98) of claim 12, wherein the feed lines (10) and the return lines (12) of the two coolant circuits communicate with each other in a switchable manner by way of valves (92, 94).

14. A method for cooling at least one system for cooling at least one heat producing device in an aircraft, comprising the steps of:
- absorbing (120) heat from the heat producing device by means of a coolant flowing into a return line of a coolant circuit;
- increasing (122) the temperature of the coolant in the return line;
- by means of a dissipation device, dissipating (124) heat from the coolant whose temperature has been increased;
- reducing (126) the temperature of the coolant flowing into a feed line of the coolant circuit simultaneously with increasing (122) the temperature of the coolant in the return line.

15. An aircraft (128), comprising at least one space (6) with at least one heat dissipating device (4) and at least one system (2, 26, 42, 64, 88, 98) for cooling the heat producing device (4) of claim 1.

## Revendications

1. Système (2, 26, 42, 64, 88, 98) de refroidissement d'au moins un moyen calorigène (4) dans un avion, comportant :
au moins un circuit de fluide de refroidissement, qui est traversé par un fluide de refroidissement pour absorber de la chaleur du moyen calorigène (4),
dans lequel le circuit de fluide de refroidissement présente une conduite montante (10) se trouvant en amont du moyen calorigène (4) et une conduite descendante (12) disposée en aval du moyen calorigène et
un dispositif de dissipation de chaleur (8) se trouvant en communication fluidique avec la conduite descendante (12) du circuit de fluide de refroidissement pour dissiper de la chaleur du circuit de liquide de refroidissement,
**caractérisé par** un dispositif d'augmentation de l'écart de température (14, 52, 70, 90, 100) destiné à abaisser la température du fluide de refroidissement dans la conduite montante (10) du circuit de fluide de refroidissement et simultanément à augmenter une température de dissipation de chaleur du dispositif de dissipation de chaleur (8) par rapport à la température du fluide de refroidissement dans la conduite descendante (12) du circuit de fluide de refroidissement.

2. Système (2, 26, 42, 64, 88, 98) selon la revendication 1, comportant en outre un échangeur de chaleur de tôle d'habillage (102) disposé sur la peau extérieure de l'avion avec des canaux de circulation (103) reliés thermiquement à l'enveloppe (104) en tant que dispositif de dissipation de chaleur (8).

3. Système (2, 26, 42, 64, 88, 98) selon la revendication 2, comportant en outre un canal d'air (108) limité vers la face extérieure de l'avion par l'échangeur de chaleur de tôle d'habillage (102) avec des éléments de dissipation de chaleur (114) s'étendant dans le canal d'air (108) et pouvant être brassés par l'air.

4. Système (2, 26, 42, 64, 88, 98) selon la revendication 3, comportant en outre au moins un élément de fermeture (118) pour ouvrir ou fermer au moins une ouverture (110, 112) du canal d'air (108).

5. Système (2, 26, 42, 64, 88, 98) selon l'une des revendications précédentes, dans lequel le circuit de fluide de refroidissement est un circuit ouvert.

6. Système (2, 26, 42, 64, 88, 98) selon l'une des revendications précédentes, comportant en outre au moins un moyen de transport (30, 32, 62, 66, 80) pour transporter le fluide de refroidissement dans le circuit de fluide de refroidissement.

7. Système (2, 26, 42, 64, 88, 98) selon l'une des revendications précédentes, dans lequel le dispositif d'augmentation de l'écart de température (14, 52, 70, 90, 100) contient un circuit de fluide de refroidissement avec un condensateur (16, 58, 74) et un évaporateur (20, 54, 68).

8. Système (2, 26, 42, 64, 88, 98) selon la revendication 7, dans lequel le condensateur (16, 58, 74) est disposé dans la conduite descendante (12) du circuit de fluide de refroidissement.

9. Système (2, 26, 42, 64, 88, 98) selon la revendication 7, dans lequel l'évaporateur (20, 54, 68) est disposé dans la conduite montante et/ou descendante (12) du circuit de fluide de refroidissement.

10. Système (2, 26, 42, 64, 88, 98) selon la revendication 9, dans lequel le dispositif de dissipation de chaleur (8) est réalisé par le condensateur (16, 58, 74), qui est agencé pour être refroidi au moyen d'air à partir d'une source d'air (28) supplémentaire, la source d'air supplémentaire (28) fournissant de l'air provenant de l'intérieur de l'avion et/ou de l'environnement et/ou au moyen de prélèvement d'air.

11. Système (2, 26, 42, 64, 88, 98) selon la revendication 10, dans lequel le condensateur (16, 5 8, 74) est relié à un échangeur de chaleur (46, 58, 82), qui est agencé pour être refroidi au moyen d'air provenant de l'intérieur de l'avion et/ou par l'air ambiant et/ou par prélèvement d'air.

12. Système (2, 26, 42, 64, 88, 98) selon l'une des revendications précédentes, comportant deux circuits de fluide de refroidissement, dont les conduites montantes (10) sont reliées thermiquement entre elles par l'intermédiaire d'un échangeur de chaleur (96).

13. Système (2, 26, 42, 64, 88, 98) selon la revendication 12, dans lequel les conduites montantes (10) et les conduites descendantes (12) des deux circuits de fluide de refroidissement sont en liaison entre elles commutables par des vannes (92, 94).

14. Système de refroidissement d'au moins un moyen calorigène dans un avion, comportant les étapes suivantes :
- absorption (120) de la chaleur du moyen calorigène au moyen d'un fluide de refroidissement circulant dans une conduite descendante d'un circuit de fluide de refroidissement ;
- augmentation (122) de la température du fluide de refroidissement dans la conduite descendante ;
- dissipation (124) de chaleur du fluide de refroidissement augmentant la température avec un dispositif de dissipation de chaleur se trouvant en communication fluidique avec la conduite descendante (12) ;
- avec l'augmentation (122) de la température du fluide de refroidissement dans la conduite descendante, diminution simultanée (126) de la température du fluide de refroidissement circulant dans une conduite montante du circuit de fluide de refroidissement.

15. Avion (128) présentant au moins un espace (6) comportant au moins un dispositif (4) de dissipation de chaleur et au moins un système (2, 26, 42, 64, 88, 98) pour refroidir le moyen calorigène (4) selon la revendication 1.
